# EUROPEAN PATENT APPLICATION

(11) **EP 4 362 409 A1**
(43) Date of publication of application: **01.05.2024**
(21) Application number: 23206502.9
(22) Date of filing: 27.10.2023
(51) Int. Cl.: H04L 41/0604, H04L 41/0681, H04L 41/069, H04L 41/142, H04L 43/04

(54) **NOISY ALARM DETECTION AND MANAGEMENT IN A COMMUNICATIONS ENVIRONMENT**

(30) Priority: 27.10.2022 US 202263419835 P
(71) Applicant: Adtran, Inc., Huntsville, AL 35806 (US)
(72) Inventor: FISCHBECK, Nils, 18435 Stralsund (DE); COX, Dennis, Huntsville, 35810 (US); BACHALA, Vijay CHANDHAR, 500020 Hyderabad, Telangana (IN)
(74) Representative: Brachmann, Roland W.

(57) **Abstract**

Methods, systems, and apparatus, including computer programs encoded on a computer storage medium, for detecting and managing noisy alarms in a communications network. In some aspects an event is detected on a communications network. Two or more fields of event data of the event are extracted. An event signature that uniquely represents characteristics of the event is created using the two or more fields of event data as input. A magnitude of instances of the given event signature that are encountered over a tracking period are tracked. The event is classified as a flapping event based on a determination that the given event signature has been encountered at least a threshold number of times within a specified amount of time. One or more event processing operations are excluded from being performed for one or more events having event signatures matching the given event signature based on the classification of the event as a flapping event.

## Description

This specification is related to data processing and managing noisy alarms in a communications network.

Network management systems monitor communications environments for alarms generated by devices that are connected to the communications network. The alarms inform the network management system of various conditions that the devices on the communications network may be experiencing. For example, the alarms can inform the network management system of devices that are overheating, using more than a threshold amount of processing power, using more than a threshold amount of memory, or other abnormal conditions.

It is therefore an objective to improve existing solutions. This is achieved according to the features of the independent claims. Further embodiments result from the depending claims.

The examples suggested herein may in particular be based on at least one of the following solutions. Combinations of the following features may be utilized to reach a desired result. The features of the method could be combined with any feature(s) of the system or the computer-readable medium or vice versa.

A method is provided, comprising:
- detecting, by one or more data processing apparatus, an event on a communications network;
- extracting, by the one or more data processing apparatus, two or more fields of event data of the event;
- creating, by the one or more data processing apparatus, a given event signature that uniquely represents characteristics of the event using a function that generates the given event signature as an output in response to receiving the two or more fields of event data as input;
- tracking, in a tracking data structure, a magnitude of instances of the given event signature that are encountered over a tracking period;
- classifying, by the one or more data processing apparatus, the event as a flapping event based on a determination that the magnitude indicates that the given event signature has been encountered at least a threshold number of times within a specified amount of time; and
- excluding, by the one or more data processing apparatus, one or more event processing operations from being performed for one or more events having event signatures matching the given event signature based on the classification of the event as a flapping event.

According to an embodiment, excluding one or more event processing operations from being performed comprises:
- encountering an additional event signature;
- determining that (i) the additional event signature matches the given event signature, and (ii) the event is currently classified as a flapping event; and
- preventing processing of the one or more events corresponding to the additional event signature based on the determination that (i) the additional event signature matches the given event signature, and (ii) the event is currently classified as a flapping event.

According to an embodiment, creating the given event signature that uniquely represents characteristics of the detected event comprises computing a given hash of a concatenation of the two or more fields of event data of the event.

The method of claim 3, further comprising:
- generating a subsequent hash of a concatenation of the two or more fields of event data for each subsequent event; and
- tracking the subsequent hashes generated for the subsequent events.

According to an embodiment,
- tracking the subsequent hashes comprises:
   - searching a counter structure for the subsequent hash of each of the subsequent events;
   - in response to not identifying an entry in the counter structure that matches the subsequent hash, creating an entry in the counter structure corresponding to the subsequent hash; and
   - after creating the entry in the counter structure corresponding to the subsequent hash, incrementing a counter corresponding to the entry in response to identifying the entry as a match another of the subsequent hashes; and
- classifying the event as a flapping event comprises determining that the counter corresponding to the entry has reached a threshold level.

According to an embodiment, the method further comprises:
- determining that a given timestamp corresponding to a given subsequent hash is more than a specified amount of time after a reference timestamp corresponding to the entry; and
- updating the reference timestamp based on the given timestamp in response to determining that the given timestamp is more than the specified amount of time after the reference timestamp.

According to an embodiment,
- tracking the subsequent hashes comprises:
   - searching a time log structure for the subsequent hash of each of the subsequent events;
   - in response to not identifying an entry in the time log structure that matches the subsequent hash:
      - creating an entry in the time log structure corresponding to the subsequent hash; and
      - adding a timestamp corresponding to the subsequent hash to the entry;
   - after creating the entry in the time log structure corresponding to the subsequent hash, adding an additional timestamp corresponding to each subsequent hash that is identified as a match to the entry; and
- classifying the event as a flapping event comprises determining that a number of stored timestamps for the entry has reached a threshold level.

According to an embodiment, the method further comprises:
- in response to identifying the entry in the time log structure, removing one or more timestamps that are more than a specified amount of time prior to a current time.

According to an embodiment, the method further comprises:
- comparing a subsequent timestamp of a subsequent instance of the given event signature to a prior timestamp of a prior instance of the given event signature that is stored in the tracking data structure;
- removing the prior timestamp from the tracking data structure based on a determination that the subsequent timestamp is more than the specified amount of time after the prior timestamp;
- adding the subsequent timestamp to the tracking data structure; and
- updating a classification of the event represented by the given event signature based on an updated magnitude of instances of the given event signature determined following removal of the prior timestamp and addition of the subsequent timestamp, wherein updating the classification of the event comprises reclassifying the event as a non-flapping event.

Also, a system is suggested, comprising:
- a data structure; and
- a network management system comprising one or more data processing apparatus configured to interact with the data structure and execute instructions that cause the one or more data processing apparatus to perform operations comprising:
   - detecting an event on a communications network;
   - extracting two or more fields of event data of the event;
   - creating a given event signature that uniquely represents characteristics of the event using a function that generates the given event signature as an output in response to receiving the two or more fields of event data as input;
   - tracking, in the data structure, a magnitude of instances of the given event signature that are encountered over a tracking period;
   - classifying the event as a flapping event based on a determination that the magnitude indicates that the given event signature has been encountered at least a threshold number of times within a specified amount of time; and
   - excluding one or more event processing operations from being performed for one or more events having event signatures matching the given event signature based on the classification of the event as a flapping event.

According to an embodiment, excluding one or more event processing operations from being performed comprises:
- encountering an additional event signature;
- determining that (i) the additional event signature matches the given event signature, and (ii) the event is currently classified as a flapping event; and
- preventing processing of the one or more events corresponding to the additional event signature based on the determination that (i) the additional event signature matches the given event signature, and (ii) the event is currently classified as a flapping event.

According to an embodiment, creating the given event signature that uniquely represents characteristics of the detected event comprises computing a given hash of a concatenation of the two or more fields of event data of the event.

According to an embodiment, the instructions cause the one or more data processing apparatus to perform operations further comprising:
- generating a subsequent hash of a concatenation of the two or more fields of event data for each subsequent event; and
- tracking the subsequent hashes generated for the subsequent events.

According to an embodiment,
- tracking the subsequent hashes comprises:
   - searching a counter structure for the subsequent hash of each of the subsequent events;
   - in response to not identifying an entry in the counter structure that matches the subsequent hash, creating an entry in the counter structure corresponding to the subsequent hash; and
   - after creating the entry in the counter structure corresponding to the subsequent hash, incrementing a counter corresponding to the entry in response to identifying the entry as a match another of the subsequent hashes; and
- classifying the event as a flapping event comprises determining that the counter corresponding to the entry has reached a threshold level.

According to an embodiment, the instructions cause the one or more data processing apparatus to perform operations further comprising:
- determining that a given timestamp corresponding to a given subsequent hash is more than a specified amount of time after a reference timestamp corresponding to the entry; and
- updating the reference timestamp based on the given timestamp in response to determining that the given timestamp is more than the specified amount of time after the reference timestamp.

According to an embodiment,
- tracking the subsequent hashes comprises:
   - searching a time log structure for the subsequent hash of each of the subsequent events;
   - in response to not identifying an entry in the time log structure that matches the subsequent hash:
      - creating an entry in the time log structure corresponding to the subsequent hash; and
      - adding a timestamp corresponding to the subsequent hash to the entry;
   - after creating the entry in the time log structure corresponding to the subsequent hash, adding an additional timestamp corresponding to each subsequent hash that is identified as a match to the entry; and
   - classifying the event as a flapping event comprises determining that a number of stored timestamps for the entry has reached a threshold level.

According to an embodiment, the instructions cause the one or more data processing apparatus to perform operations further comprising:
- in response to identifying the entry in the time log structure, removing one or more timestamps that are more than a specified amount of time prior to a current time.

According to an embodiment, the instructions cause the one or more data processing apparatus to perform operations further comprising:
- comparing a subsequent timestamp of a subsequent instance of the given event signature to a prior timestamp of a prior instance of the given event signature that is stored in the data structure;
- removing the prior timestamp from the data structure based on a determination that the subsequent timestamp is more than the specified amount of time after the prior timestamp;
- adding the subsequent timestamp to the data structure; and
- updating a classification of the event represented by the given event signature based on an updated magnitude of instances of the given event signature determined following removal of the prior timestamp and addition of the subsequent timestamp, wherein updating the classification of the event comprises reclassifying the event as a non-flapping event.

Also, a non-transitory computer readable medium is provided, storing instructions that, upon execution by one or more data processing apparatus, cause the one or more data processing apparatus to perform operations comprising:
- detecting an event on a communications network;
- extracting two or more fields of event data of the event;
- creating a given event signature that uniquely represents characteristics of the event using a function that generates the given event signature as an output in response to receiving the two or more fields of event data as input;
- tracking, in a data structure, a magnitude of instances of the given event signature that are encountered over a tracking period;
- classifying the event as a flapping event based on a determination that the magnitude indicates that the given event signature has been encountered at least a threshold number of times within a specified amount of time; and
- excluding one or more event processing operations from being performed for one or more events having event signatures matching the given event signature based on the classification of the event as a flapping event.

According to an embodiment, excluding one or more event processing operations from being performed comprises:
- encountering an additional event signature;
- determining that (i) the additional event signature matches the given event signature, and (ii) the event is currently classified as a flapping event; and
- preventing processing of the one or more events corresponding to the additional event signature based on the determination that (i) the additional event signature matches the given event signature, and (ii) the event is currently classified as a flapping event.

According to an embodiment, creating the given event signature that uniquely represents characteristics of the detected event comprises computing a given hash of a concatenation of the two or more fields of event data of the event.

According to an embodiment, the instructions cause the one or more data processing apparatus to perform operations further comprising:
- generating a subsequent hash of a concatenation of the two or more fields of event data for each subsequent event; and
- tracking the subsequent hashes generated for the subsequent events.

According to an embodiment,
- tracking the subsequent hashes comprises:
   - searching a counter structure for the subsequent hash of each of the subsequent events;
   - in response to not identifying an entry in the counter structure that matches the subsequent hash, creating an entry in the counter structure corresponding to the subsequent hash; and
   - after creating the entry in the counter structure corresponding to the subsequent hash, incrementing a counter corresponding to the entry in response to identifying the entry as a match another of the subsequent hashes; and
- classifying the event as a flapping event comprises determining that the counter corresponding to the entry has reached a threshold level.

According to an embodiment, the instructions cause the one or more data processing apparatus to perform operations further comprising:
- determining that a given timestamp corresponding to a given subsequent hash is more than a specified amount of time after a reference timestamp corresponding to the entry; and
- updating the reference timestamp based on the given timestamp in response to determining that the given timestamp is more than the specified amount of time after the reference timestamp.

According to an embodiment,
- tracking the subsequent hashes comprises:
   - searching a time log structure for the subsequent hash of each of the subsequent events;
   - in response to not identifying an entry in the time log structure that matches the subsequent hash:
      - creating an entry in the time log structure corresponding to the subsequent hash; and
      - adding a timestamp corresponding to the subsequent hash to the entry;
   - after creating the entry in the time log structure corresponding to the subsequent hash, adding an additional timestamp corresponding to each subsequent hash that is identified as a match to the entry; and
- classifying the event as a flapping event comprises determining that a number of stored timestamps for the entry has reached a threshold level.

According to an embodiment, the instructions cause the one or more data processing apparatus to perform operations further comprising:
- in response to identifying the entry in the time log structure, removing one or more timestamps that are more than a specified amount of time prior to a current time.

According to an embodiment, the instructions cause the one or more data processing apparatus to perform operations further comprising:
- comparing a subsequent timestamp of a subsequent instance of the given event signature to a prior timestamp of a prior instance of the given event signature that is stored in the data structure;
- removing the prior timestamp from the data structure based on a determination that the subsequent timestamp is more than the specified amount of time after the prior timestamp;
- adding the subsequent timestamp to the data structure; and
- updating a classification of the event represented by the given event signature based on an updated magnitude of instances of the given event signature determined following removal of the prior timestamp and addition of the subsequent timestamp, wherein updating the classification of the event comprises reclassifying the event as a non-flapping event.

In general, one innovative aspect of the subject matter described in this specification can be embodied in methods that include the actions of detecting, by one or more data processing apparatus, an event on a communications network; extracting, by the one or more data processing apparatus, two or more fields of event data of the event; creating, by the one or more data processing apparatus, a given event signature that uniquely represents characteristics of the event using a function that generates the given event signature as an output in response to receiving the two or more fields of event data as input; tracking, in a tracking data structure, a magnitude of instances of the given event signature that are encountered over a tracking period; classifying, by the one or more data processing apparatus and based on the tracked magnitude, the event as a flapping event based on a determination that the given event signature has been encountered at least a threshold number of times within a specified amount of time; and excluding, by the one or more data processing apparatus, one or more event processing operations from being performed for one or more events having event signatures matching the given event signature based on the classification of the event as a flapping event.

These and other embodiments can each optionally include one or more of the following features.

Excluding one or more event processing operations from being performed can include encountering an additional event signature; determining that (i) the additional event signature matches the given event signature, and (ii) the event is currently classified as a flapping event; and preventing processing of the one or more events corresponding to the additional event signature based on the determination that (i) the additional event signature matches the given event signature, and (ii) the event is currently classified as a flapping event.

Creating the given event signature that uniquely represents characteristics of the detected event can include computing a given hash of a concatenation of the two or more fields of event data of the event.

Methods can include the actions of generating a subsequent hash of a concatenation of the two or more fields of event data for each subsequent event; and tracking the subsequent hashes generated for the subsequent events.

Tracking the subsequent hashes can include searching a counter structure for the subsequent hash of each of the subsequent events; in response to not identifying an entry in the counter structure that matches the subsequent hash, creating an entry in the counter structure corresponding to the subsequent hash; and after creating the entry in the counter structure corresponding to the subsequent hash, incrementing a counter corresponding to the entry in response to identifying the entry as a match another of the subsequent hashes.

Classifying the event as a flapping event can include determining that the counter corresponding to the entry has reached a threshold level.

Methods can include the actions of determining that a given timestamp corresponding to a given subsequent hash is more than a specified amount of time after a reference timestamp corresponding to the entry; and updating the reference timestamp based on the given timestamp in response to determining that the given timestamp is more than the specified amount of time after the reference timestamp.

Tracking the subsequent hashes can include searching a time log structure for the subsequent hash of each of the subsequent events; in response to not identifying an entry in the time log structure that matches the subsequent hash: creating an entry in the time log structure corresponding to the subsequent hash; and adding a timestamp corresponding to the subsequent hash to the entry; after creating the entry in the time log structure corresponding to the subsequent hash, adding an additional timestamp corresponding to each subsequent hash that is identified as a match to the entry; and classifying the event as a flapping event comprises determining that a number of stored timestamps for the entry has reached a threshold level.

Methods can include the actions of in response to identifying the entry in the time log structure, removing one or more timestamps that are more than a specified amount of time prior to a current time.

Methods can include comparing a subsequent timestamp of a subsequent instance of the given event signature to a prior timestamp of a prior instance of the given event signature that is stored in the tracking data structure; removing the prior timestamp from the tracking data structure based on a determination that the subsequent timestamp is more than the specified amount of time after the prior timestamp; adding the subsequent timestamp to the tracking data structure; and updating a classification of the event represented by the given event signature based on an updated magnitude of instances of the given event signature determined following removal of the prior timestamp and addition of the subsequent timestamp, wherein updating the classification of the event comprises reclassifying the event as a non-flapping event.

Particular embodiments of the subject matter described in this specification can be implemented so as to realize one or more of the following advantages. For example, the techniques described herein improve over traditional alarm monitoring techniques by enabling events, such as alarms, to be tracked on a per-entity basis within a specific client device, such that alarms (or other events) for other entities within the device are still able to be detected and processed while noisy alarms being generated by another entity within that same device can be ignored. This is not possible using traditional alarm/event monitoring techniques, which manage alarms (or other events) on a per-device basis rather than a per-entity basis. The techniques discussed herein also reduce the amount of data being processed by the network management system by conditioning processing of detected alarms from a particular entity on the particular alarm from the particular entity not currently being classified as a noisy alarm. In other words, the network management system first determines whether a particular alarm from a particular entity is currently classified as a noisy/flapping alarm before allowing the particular alarm to be processed further. If the particular alarm is currently classified as a noisy/flapping alarm, the alarm can be ignored, such that the computing resources required to be used to process (e.g., take corrective action in response to) the particular alarm are not utilized. Given the fact that there can be 100,000 different devices (or more) being monitored by the network management system at any given time, this results in a large resource savings. Furthermore, the techniques discussed herein reduce the amount of memory required to track the alarm (or other event) history on a per-entity basis by using representations of the alarms that use less memory than the original information corresponding to the representations of the alarms. For example, the original information corresponding to a particular alarm can be input to a hashing function that outputs a smaller representation of the original information that will require less memory than the original information. Because of the large number of events that need to be tracked and stored to provide a historical view of network activity, the storage requirements can expand quickly if optimizations are not utilized to reduce the amount of data required to be stored while still providing the required level of event information. The smaller representations of the original information are also faster to search than the original information when determining whether an alarm from a particular entity has been received within a current time period.

The details of one or more embodiments of the subject matter described in this specification are set forth in the accompanying drawings and the description below. Other features, aspects, and advantages of the subject matter will become apparent from the description, the drawings, and the claims.
- FIG. 1: is an illustration of an example communications environment 100 in which noisy events can be managed.
- FIG.2: is an illustration of a network management system monitoring for noisy alarms.
- FIG.3: is a flow chart of an example process for managing noisy alarms in a communications environment.
- FIG.4: is a flow chart of an example process for tracking alarms.
- FIG.5: is a flow chart of another example process for tracking alarms.
- FIG.6: is a block diagram of an example computing system.

Like reference numbers and designations in the various drawings indicate like elements.

This specification discusses techniques, methods, and systems for detecting and managing noisy/flapping events (e.g., alarms). As used throughout this document, a noisy event, which is also referred to as a flapping event is a particular type of event that is generated by a particular entity (e.g., a particular component within a device) with more than a threshold frequency over a specified amount of time. For example, assume that the noisy/flapping event frequency threshold is 5 events over a 2-minute period. In this example, if a particular entity (e.g., a temperature monitor) in a particular device (e.g., an optical line terminal) reports more than 5 events over a 2-minute period, the events from that entity will be classified as noisy/flapping events and will be ignored until the event frequency is again below the frequency threshold (or some other specified level). Throughout this document, alarms are used for purposes of example, but the description should be considered to be equally applicable to other events as well.

As discussed in more detail below, a network management system can track events on a per-entity basis, create an event signature representing the event, and classify the event as a noisy/flapping event when the event signature frequency for the event exceeds the frequency threshold. For example, the event signature can be created using a function, such as a hash function, into which two or more fields of the event data corresponding to the event are input. The output of the function is then used to search a data structure storing the unique representations of previously detected events to determine whether the same event has been detected within a current monitoring period, also referred to as a tracking period. If the output of the function is not identified in the data structure, the output can be added to the data structure along with a timestamp corresponding to a time of the event. If the output of the function is identified in the data structure, the data structure can be updated to indicate that another instance of the event has been detected. When the data structure indicates that a particular event has been detected at least a threshold number of times over a specified amount of time, that particular event can be classified as a noisy/flapping event and excluded from further processing based on the classification.

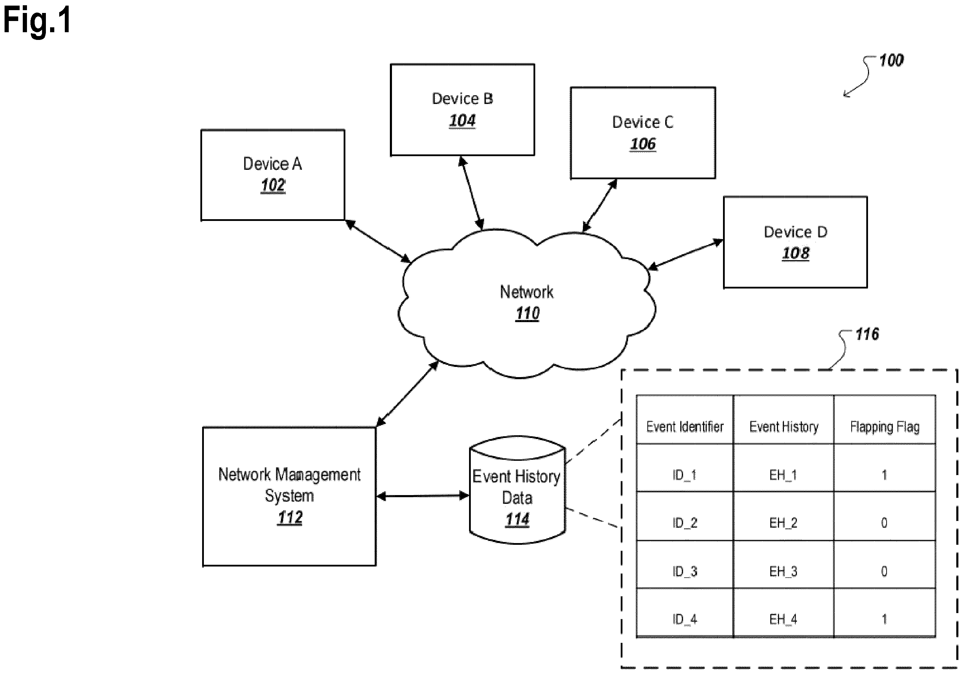

FIG.1 is an illustration of an example communications environment 100 in which noisy events (e.g., alarms) can be managed. The communications environment 100 includes multiple devices, such as Device A 102, Device B 104, Device C 106, and Device D 108, that are connected to a network 110. The devices 102-108 can be, for example, optical line terminals ("OLTs") that are communicating over the network 110. In this example, the devices 102-108 can be connected to optical network units ("ONUs") (not shown) to provide the ONUs access to the network 110. Of course, the environment 100 can include other types of devices, such as aggregation switches and/or other types of devices.

The communications environment 100 also includes a Network Management System ("NMS") 112 that manages the devices connected to the network 110. The NMS 112 is a data processing apparatus (e.g., a computing system that includes one or more hardware processing devices) that monitors for events (e.g., alarms) generated by the devices 102-108 that are connected to the network 110. For example, as discussed in more detail throughout this specification, the NMS 112 can receive (or otherwise detect) alarms and/or other events generated by the devices 102-108, classify specific events as noisy/flapping when their frequency meets and/or exceeds a specified frequency threshold, and prevent processing of events that have been classified as noisy/flapping.

The NMS 112 utilizes an event history database 114 to store event data related to alarms and/or other events. The event history database 114 is a data storage device (e.g., hardware memory device) that includes a data structure 116 in which the event data is stored. For example, as shown in FIG.1, the data structure 116 can include event identifiers, event history information, and a flapping flag indicating whether the specific event has been classified as a noisy/flapping event.

The event identifier included in the data structure 116 is a value that uniquely represents a specific event (e.g., alarm). For example, the event identifier ID_1 can uniquely represent a specific type of event (e.g., a temperature alarm) that was generated by a specific entity (e.g., CPU temperature sensor) in a specific device (e.g., Device A 102). Similarly, the event identifiers ID_2, ID_3, and ID_4 can uniquely represent that same specific type of event (or different types of events) generated by other entities of the same or different devices. By generating different event identifiers for different combinations of event types and entities that are the source of the events, respectively, the NMS 112 is able to efficiently track event frequency for each different event type on a per-entity basis.

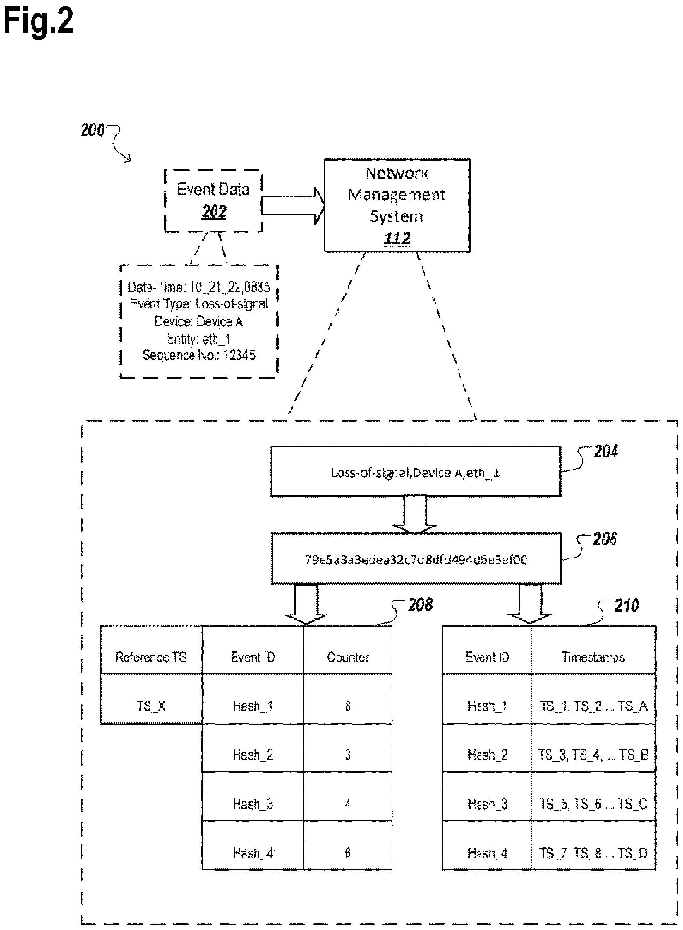

In some implementations, the event identifier can take the form of an event signature, which uniquely represents characteristics of the event. For example, the event signature can be a string of characters that represents a combination of the type of event (e.g., alarm) being reported, a device identifier (e.g., Internet Protocol "IP" Address) of the device reporting the event, and an entity identifier (e.g., name and/or description) of an entity (e.g., device component) that is experiencing the situation (e.g., problem) causing the event to be reported. In a specific example, the event signature can be created by inputting the combination of characteristics of the event into a hash function (or another function) that outputs a value that can be used as the event signature. In this way, the event signature can be recreated every time that the same event is reported by the same entity within the same device, thereby enabling the event frequency of that particular event at that particular entity to be tracked over time. While a hash function is described herein, note that it is not necessary to use a hash function to carry out the proposed tracking technique. The creation of the event signature is discussed in more detail below with reference to FIG.2.

The event history included in the data structure 116 is data indicating how frequently the corresponding particular event has occurred. For example, the event history can indicate how many times the event identifier corresponding to a particular event (as reported by a particular entity of a particular device) has been encountered by the NMS 112.

To illustrate, assume that the event identifier ID_1 is an event signature created by hashing the combination of the type of alarm being reported, the IP address for Device A 102, and the entity (e.g., device component) within device A 102 that is experiencing the condition that is causing the alarm, In this example, the event history that is included in the data structure can be a count (e.g., 0, 1, 2, 3, etc.) of how many times that event signature has been encountered by the NMS 112. More specifically, the event history EH_1 can store a value of 8 when the event identifier ID_1 has been encountered by the NMS 112. Additionally, or alternatively, the event history EH_1 can include timestamp information indicating when the event identifier ID_1 has been encountered by the NMS 112.

As discussed in more detail with reference to FIG.2, the timestamp information can include a single reference timestamp that is used, at least in part, to designate time periods during which occurrences of the event identifier are counted. Additionally, or alternatively, the timestamp information can include the timestamp corresponding to each occurrence of the event identifier, which not only provides information about the relative time between occurrences of the event identifier, but can also be used to count the number of occurrences of the event identifier. For example, the NMS 112 can count the number of timestamps stored in the data structure 116 for a particular event identifier to determine how many times that particular event identifier has been encountered over a designated period.

The flapping flag stored in the data structure 116 is an indication as to whether the event frequency of a particular event identifier has met or exceeded a threshold event frequency and/or a threshold number within a specified amount of time. For example, assume that the threshold event frequency for classifying an event as a noisy/flapping event is 5 events over a specified time period, and that the NMS 112 determines that the event history EH_1 for the event identifier ID_1 indicates that ID_1 has been encountered 8 times within a specified amount of time. In this example, the NMS 112 can classify the event represented by ID_1 as a noisy/flapping event and set the flapping flag in the data structure 116 accordingly (e.g., to a value of 1).

A flapping flag is used for purposes of example, as is the value of 1 to indicate a noisy/flapping event. Of course, there are other ways in which the classification of different events can be tracked. For example, the NMS 112 can maintain a list of event identifiers that have been classified as noisy/flapping events. In this example, the NMS 112 can add an event identifier to the list when the corresponding event history for that event indicates that the event is a noisy/flapping event. Similarly, when the event frequency of an event that has been previously classified as a noisy/flapping event falls to a level at which the NMS 112 determines that the event should no longer be classified as a noisy/flapping event, the NMS 112 can remove the event identifier from the list and/or clear the flapping flag from the data structure 116, as discussed in more detail with reference to FIG.2.

Once the event corresponding to ID_1 is classified as a noisy/flapping event, the NMS 112 can exclude that event from further processing until that event is no longer classified as a noisy/flapping event. For example, while ID_1 is classified as a noisy/flapping event, the NMS 112 can continue to monitor for additional instances of ID_1 and update the data structure 116 in the event history database 114, but the NMS 112 can otherwise ignore the occurrence of ID_1, and not take any action to mitigate the event corresponding to ID_1. Furthermore, the NMS 112 can prevent actions from being taken in response to detecting ID_1 while ID_1 is classified as a noisy/flapping event. For example, the NMS 112 can prevent information about the event represented by ID_1 from being forwarded to other data processing systems that may take actions to correct an error that is occurring at the device reporting the error represented by ID_1, such that ID_1 is filtered from the event processing pipeline that would otherwise allocate computing resources (e.g., memory, CPU power, and/or network bandwidth) to taking corrective action to address the event being reported by a device on the network 110.

FIG.2 is an illustration 200 of a network management system 112 monitoring for noisy events. The network management system 112 detects an event on a communications network, for example, by receiving event data 202 that characterizes the event. The event data 202 can be generated by a device that is connected to the NMS 112 over a network, such as Device A 102 of FIG. 1. For example, the device that generates the event data 202 can be an OLT that is operating on a Passive Optical Network ("PON") that is managed by the NMS 112. Of course, the event data can be generated by other types of communications devices in a communications network.

The event data 202 can include various types of information that characterize an event occurring at a device operating within a communications network. For example, the event data can include one or more of the following characteristics of an event:
1) A time when the event occurred.
2) A type of event (e.g., loss-of-signal).
3) A device that has the event (e.g., a device at IP address 10.10.10.1).
4) A perceived severity of the event (e.g., major, minor).
5) A state of the event (e.g., on or off).
6) A description of the event (e.g., "Loss of signal occurred").
7) An entity inside the device which has the problem or condition that triggered. generation of the event data 202, such as a managed object class and instance (e.g., Ethernet port 1).
8) Further details of the event (e.g., root cause, repair actions, last time of occurrence).
9) A sequence number of the event as generated from the device.
10) A unique key that identifies the event from the device (e.g., a universally unique identifier "UUID" that is generated using a timestamp and the MAC address of the device on which it was generated).

In some situations, the some of these characteristics may not be present in the event data 202, while other characteristics beyond those listed may be present in the event data 202. In some implementations, the event data 202 can be generated in an XML or JSON format that the NMS 112 is capable of reading and/or parsing. The event data 202 can be structured, for example, such that different characteristics of the event are contained in different fields of the event data 202. For example, the event data 202 is shown to include the following information:
Date-Time: 10_21_22,0835
Event Type: Loss-of-signal
Device: Device_A_ID
Entity: eth_1
Sequence No.: 12345

In this example, the Date-Time information can be included in one field of the event data 202, while each of the Event Type, Device, Entity, and Sequence No. can each be included in separate fields of the event data. The Date-Time field of the event data 202 can specify a date of the event (e.g., 10/21/2022) and/or a time of day corresponding to the event, such as when the event occurred or the event data was generated (e.g., 0835 indicating 8:35am).

The Event Type field of the event data 202 can specify a type of event that is being reported (e.g., Loss of Signal). The event data 202 can characterize any type of event being experienced by a device (or node) that is operating on the communications network being managed by the NMS 112. Example, event types include:
Temperature threshold crossed.
CPU threshold crossed (e.g., out of compute power or memory).
Ethernet line out of power.

Of course, other types of events can be characterized using the event data 202.

The Device field of the event data 202 can specify an identifier (e.g., Device A _ID) of a device that is experiencing the event characterized by the event data 202. In some implementations, the Device field can include an IP address, a device name, or another identifier that can be used to identify the device at which the event is occurring.

The Entity field of the event data 202 can specify a particular entity (e.g., ethernet port 1) within the identified device at which the event is occurring and/or the entity that is detecting the event. As used in this specification, an entity of a device can be a component of the device, such as a port, a sensor (e.g., temperature sensor), a CPU monitor, or another component of the device that monitors conditions of the device.

The Sequence No. field of the event data can specify a sequency number that can be used to determine a relative order of the event among other events having other sequence numbers.

The NMS 112 extracts information from at least some of the fields of the event data 202. For example, the NMS 112 can extract all of the information from the fields of the event data 202, or extract information from fewer than all of the fields of the event data. In some implementations, the NMS 112 extracts at least two fields of the event data 202. For purposes of example, and as illustrated by FIG.2, assume that the NMS 112 extracts the Event Type field, Device field, and Entity field from the event data 202 to create a set of extracted event data 204.

The NMS 112 uses the set of extracted event data 204 to create an event signature 206 (or another event identifier) that uniquely represents characteristics of the event characterized by the event data 202. For example, by extracting the type of event, device identifier, and entity that is reporting the event, it is possible to create an event signature that will not be matched unless the event data for another event has the same event type, device identifier, and entity information. As such, the value created by the NMS 112 using the combination of these factors enables events to be tracked on a per-event and per-entity basis to ensure that the NMS 112 is able to continue processing alarms from different entities within a particular device, even when the NMS 112 is ignoring a particular alarm from a particular entity within the device.

In some implementations, the NMS 112 creates the event signature 206 by concatenating the event type, device identifier, and entity information, as shown in the set of extracted event data 204, and inputting the concatenated information to a hash function (or another appropriate function). In some implementations, the hash function can be an MD5 sum or another appropriate hash function. The output of the hash function will be a string of characters (e.g., hex values) that uniquely identifies the combination of event characteristics for the particular event characterized by the set of extracted event data 202. This allows for the NMS 112 to keep track of the frequency with which each entity within each device is reporting different events (e.g., alarms), as described in more detail below. Note that the NMS 112 can track any event identifier type that uniquely identifies events. Use of a hash as the event identifier tracked results in a more efficient system by reducing the memory consumption required to track the events.

Once the NMS 112 has created the event signature 206, the NMS 112 can keep track of event frequency by storing the event signature and frequency information in a data structure. FIG.2 shows two representations of data structures that can be used to track events over time, and either of the data structures (or both) can be used to track the occurrence of events over time. The first data structure is referred to as a counter structure 208, and the second data structure is referred to as a time log structure 210.

The counter structure 208 and the time log structure 210, as illustrated, track the occurrence of events over time in different ways. For example, the counter structure 208 uses a counter and a reference timestamp (e.g., Reference TS: TS_X) to track the number of times a particular event has been detected over a specified period. Meanwhile, the time log structure 210 uses a series of timestamps from which the number of instances of an event over a given time period can be derived. In some implementations, each of the structures 208 and 210 can be considered a hash map that stores hash values of the event signatures 206 generated as discussed above. Each entry in the hash map can have corresponding data that are used to determine the frequency of occurrence of a corresponding event represented by the hash values. For example, in the case of the counter structure 208, the counter value can specify the magnitude of detected events represented by the corresponding hash value. Meanwhile, in the case of the time log structure 210, the timestamps stored in association with (e.g., indexed to) the corresponding hash value can be used to determine the frequency of occurrence of the event represented by the corresponding hash value.

As noted above, the NMS 112 can use either of the data structures and corresponding techniques for tracking events over time. Furthermore, tracking events in the manner described with reference to either of the data structures enables the NMS 112 to track event frequency on a per-device and per-entity basis without having to take action beyond identifying the event using the event signature. In other words, the processing normally performed by traditional systems is not required, such that the event tracking discussed below saves processing resources (e.g., CPU cycles and/or memory usage), and prevents redundant performance of mitigation techniques for events that have already been identified and/or are being processed. To achieve these advantages, the event tracking techniques discussed below are implemented at a front end of an event processing pipeline so that subsequent processing of the event at later stages of the event processing pipeline are not performed when an event is classified as a noisy/flapping event based on the event tracking stage. The counter structure 208 will be discussed first, with the discussion of the time log structure 210 following that of the counter structure 208.

As illustrated in FIG.2, the counter structure 208 includes entries for event identifiers, and counter values corresponding to each event identifier. Initially, the counter structure 208 may be empty, for example, before the NMS 112 has detected any alarms and/or created any event signatures 206, or other event identifiers that have been logged in the counter structure 208.

After creating an event signature 206, as described above, the NMS 112 can search the counter structure 208 to determine whether the counter structure 208 includes an entry matching the created event signature 206. For example, assume that the NMS 112 creates the event signature 206, which has a value of 79e5a3a3edea32c7d8dfd494d6e3ef00, using a hash function. In this example, the NMS 112 can use the value of the event signature (e.g., the resulting hash value 79e5a3a3edea32c7d8dfd494d6e3ef00) to search the counter structure 208 for a matching entry. In the event that the NMS 112 does not identify a matching entry in the counter structure 208, the NMS 112 can create an entry in the counter structure 208 to indicate that an event having the event signature 79e5a3a3edea32c7d8dfd494d6e3ef00 has been detected. For example, the hash value 79e5a3a3edea32c7d8dfd494d6e3ef00 can be entered in into the "Event ID" column of the counter structure 208. When the NMS 112 creates an entry into the counter structure 208, the counter for that entry can be incremented to 1, or the counter can remain at 0 until a subsequent matching event signature is encountered (e.g., created or received) by the NMS 112.

After creating the entry for a particular event signature in the counter structure 208, the NMS 112 will increment the counter each time a matching event signature is encountered during a specified amount of time, referred to as a tracking period. The tracking period during which a counter is incremented to track events during that tracking period can be defined in a number of ways. One way of defining the tracking period is by using a reference timestamp (e.g., "Reference TS" TS_X) to determine whether the event represented by the event signature has occurred in the same tracking period as prior detected events. For example, the NMS 112 can initially set the reference timestamp to be equal to the timestamp of a first detected event, and the tracking period can be defined as a specified amount of time after the reference timestamp. In this example, upon encountering a first event signature of a first event, the current time or a timestamp received in the event data 202 for that first event can be stored as the reference timestamp. After the reference timestamp is stored (or otherwise set), the NMS 112 can determine whether the tracking period that began at the time specified by the reference timestamp is still active when subsequent events are detected by comparing timestamps corresponding to the subsequent events to the reference timestamp (e.g., TS_X in FIG.2). Note that one reference timestamp can be used, or multiple reference timestamps can be used. For example, when multiple reference timestamps are used, each given event signature can have a corresponding reference timestamp that is managed based on the timestamps of instances of that given event signature and used to determine whether subsequent instances of that given event signature were encountered within the same tracking period.

For example, the NMS 112 can inspect a given timestamp corresponding to a given event signature (e.g., a hash value) that matches the event signature corresponding to the reference timestamp. In this example, the counter for the stored event signature that matches the given event signature can be incremented in response to the NMS 112 determining that the given timestamp is within a specified amount of time of the reference timestamp because the tracking period corresponding to the reference timestamp, which extends the specified amount of time after the time of the reference timestamp, is still active.

However, when the NMS 112 determines that the given timestamp is more than the specified amount of time after the reference timestamp, the NMS 112 can reset the counter for the stored event signature to a starting value, such as 0 or 1 depending on the implementation, and update the reference timestamp to the value of the given timestamp, which will be the reference point for measuring the next tracking period.

During this next tracking period, the NMS 112 can increment the counter each time a matching event signature having a timestamp that is within the specified amount of time of the given timestamp, which is now the reference timestamp, thereby tracking the frequency of the events that occur during that tracking period.

With reference to FIG.2, the event signatures stored in the counter structure 208 are Hash_1, Hash_2, Hash_3, and Hash_4, which are four different event signatures created using a hash function, as described above. Each of these event signatures represents a different combination of (e.g., concatenation of) event type, device identifier, and entity. The counter structure 208 also has counter values indicating that Hash_1 has been encountered (e.g., received, detected, or created) by the NMS 112 8 times during a current tracking period measured from the reference timestamp TS_X, Hash_2 has been encountered by the NMS 112 3 times during the current tracking period, Hash_3 has been encountered 4 times during the current tracking period, and Hash 4 has been encountered 6 times during the current tracking period. As such, each instance of the event signatures in the counter structure that has been counted had a timestamp that is within the specified amount of time after the reference timestamp TS_X.

Continuing with this example, the NMS 112 can use the counter information for each of the event signatures to determine whether the event represented by each event signature is a noisy/flapping event. For instance, assume that an event is considered to be noisy/flapping if it is reported at least 5 times during a single tracking period. In this example, the NMS 112 can classify the events corresponding to event signatures Hash_1 and Hash_4 as noisy/flapping events based on the fact that these event signatures have been encountered more than 5 times each during the current tracking period measured from the reference timestamp TS_X. Note that the classification of these events as noisy/flapping can be performed at any time, such as at the time that the event is encountered the fifth time. Alternatively, or additionally, the classification can be done periodically by inspecting the magnitude of the counter information on a periodic basis. In either case, during the rest of the current tracking period (e.g., until the specified amount of time after the reference timestamp TS_X), the NMS 112 can prevent any additional events having the event signatures Hash_1 or Hash_4 from being processed further. In other words, the NMS 112 can ignore these reported events and/or can actively prevent these events from being forwarded for further processing once they are determined to be noisy/flapping events. As discussed above, once an event is classified as a noisy/flapping event, it can be flagged as such using a memory flag or being placed in a list of noisy/flapping events so that further processing can be prevented.

Because the event signatures Hash_2 and Hash_3 have only been encountered 3 times and 4 times, respectively, the NMS 112 has continued to process the corresponding events when they have been detected during the current processing period, for example, by passing these events to a next stage in an event processing pipeline. Specifically, the NMS 112 has taken action to address (e.g., mitigate or correct) these events each time their event signatures have been encountered. In this example, the NMS 112 will continue to process a next instance of the event corresponding to Hash_2 that is received during the current tracking period because the counter corresponding to Hash 2 will still be below 5 (e.g., the threshold magnitude for classifying an event as noisy/flapping). However, the NMS 112 can ignore or actively halt further processing of the event corresponding to Hash_3 when the event signature Hash_3 is encountered during the current tracking period because the counter for Hash_3 will have reached the threshold for classifying the event corresponding to Hash_3 as a noisy/flapping event.

The time log structure 210 is another option for tracking event frequency over time. As noted above, the time log structure 210 differs from the counter structure 208, in part, because the time log structure 210 logs the individual timestamps for the different instances of the event signatures that are encountered by the NMS 112, rather than incrementing a counter in response to each instance of the event signatures. For example, with reference to Hash_1, the time log structure 210 includes TS_A timestamps indicating that the event signature Hash_1 has been encountered A times in a given tracking period.

The NMS 112 can create entries in the time log structure 210 in a manner similar to that discussed above with reference to the counter structure 208. For example, upon encountering (e.g., creating, receiving, or detecting) a given event signature, the NMS 112 can search the time log structure 210 to determine whether the given event signature already exists in the time log structure 210. When the search does not identify the given event signature in the time log structure 210, the NMS 112 can create an entry in the time log structure 210 identifying the given event signature. For example, when the NMS 112 encounters Hash_1 for the first time, this event signature will not be included in the time log structure 210, so the NMS 112 can add this event signature to the time log structures 210.

In addition to adding an event signature to the time log structure 210 when the event signature is not identified through the search, the NMS 112 can also add the timestamp corresponding to the first instance of the event signature to the time log structure 210. Continuing with the example of Hash_1, when the NMS 112 adds Hash_1 to the time log structure 210, the NMS 112 can also add the timestamp TS_1 to the time log structure 210, thereby recording when the first instance of Hash_1 was encountered.

When each subsequent instance of a particular event signature is encountered by the NMS 112, the NMS 112 can add the timestamp for that instance of the event signature to the time log structure 210. For example, when the NMS 112 encounters Hash_1 for the second time, the timestamp TS_2 corresponding to that instance of Hash_1 can be added to the time log structure 210.

To ensure that the time log structure 210 is only storing timestamps for instances of a particular event signature that were encountered within the same tracking period, the NMS can remove any timestamps having a value that is more than the specified amount of time prior to the timestamp of the most recent instance of the event signature that was encountered. For example, assume that when the NMS 112 receives the timestamp TS_A for a most recent instance of Hash_1 that is encountered, the timestamp TS_1 has a value that is more than the duration of a tracking period prior to the timestamp TS_A, but that the rest of the timestamps for Hash_1 in the time log structure are not more than the duration of the tracking period prior to timestamp TS_A. In this example, the NMS 112 can remove TS_1 from the time log structure 210 and add the timestamp TS_A to the time log structure 210. In this way, the NMS 112 can ensure that older timestamps are not counted when determining whether a particular event is noisy/flapping.

To determine whether an event is a noisy/flapping event using the time log structure 210, the NMS 112 can count the number of timestamps that are stored for a particular event signature after the addition and/or removal of timestamps discussed above. For example, with reference to Hash_1, the NMS 112 can count how many timestamps are included in TS_1 to TS_A and compare that number of timestamps to the threshold number of timestamps used to classify an event as noisy/flapping. When the NMS 112 determines that the total number of timestamps for Hash_1 is below the threshold, the NMS 112 does not classify the event represented by Hash_1 as noisy/flapping. When the NMS 112 determines that the total number of timestamps for Hash_1 meets or exceeds the threshold, the NMS 112 classifies the event represented by Hash_1 as noisy/flapping.

The NMS 112 can include a mechanism to detect when an event is no longer noisy/flapping. In some implementations, the NMS 112 can determine whether an event is no longer noisy/flapping by updating the status when new timestamps of new event signatures are received. For example, when a subsequent instance of the given event signature is encountered, the NMS 112 can compare a subsequent timestamp of the subsequent instance of the given event signature to a prior timestamp of a prior instance of the given event signature that is stored in the tracking data structure. The actions taken based on this comparison will differ depending on the type of data structure used, as described in more detail below, but generally speaking, the NMS 112 can remove the prior timestamp from the tracking data structure based on a determination that the subsequent timestamp is more than the specified amount of time after the prior timestamp, and add the subsequent timestamp to the tracking data structure. In turn, the NMS 112 can update updating the classification of the event represented by the given event signature based on an updated magnitude of instances of the given event signature determined following removal of the prior timestamp and addition of the subsequent timestamp. In some instances, updating the classification of the event will include reclassifying the event as a non-flapping event, e.g., when the magnitude of instances of the given event signature tracked by the data structure is less than the threshold number.

For example, when using the counter structure 208, the NMS 112 can determine whether the counter for a particular event signature of an event that is currently classified as noisy/flapping has fallen to a stable level. The stable level can be some value that is at least one less than the threshold level used for classifying an event as noisy/flapping. In some situations, the stable level can be more than one less than the threshold level. In any event, when the NMS 112 determines that the counter for a particular event signature has fallen to the stable level, the NMS 112 can reset the counter for that particular event signature (e.g., to 0 or 1), and submit the event corresponding to that particular event signature for further processing (e.g., to invoke mitigation processes or otherwise perform further processing related to the event). In some implementations, this includes the NMS 112 clearing a flapping flag and/or removing the particular event signature from a list of noisy/flapping events.

When using the time log structure 210, the NMS 112 can consider the state of the particular event based on the number of timestamps for the particular event included in the time log structure 210 at regular intervals (e.g., every Y seconds). When the NMS 112 determines that the number of timestamps included in the time log structure 210 for the particular event falls to, or below, the stable level, the NMS 112 can clear the flapping flag that was set for the event signature representing the particular event and/or remove that event signature from the list of noisy/flapping events.

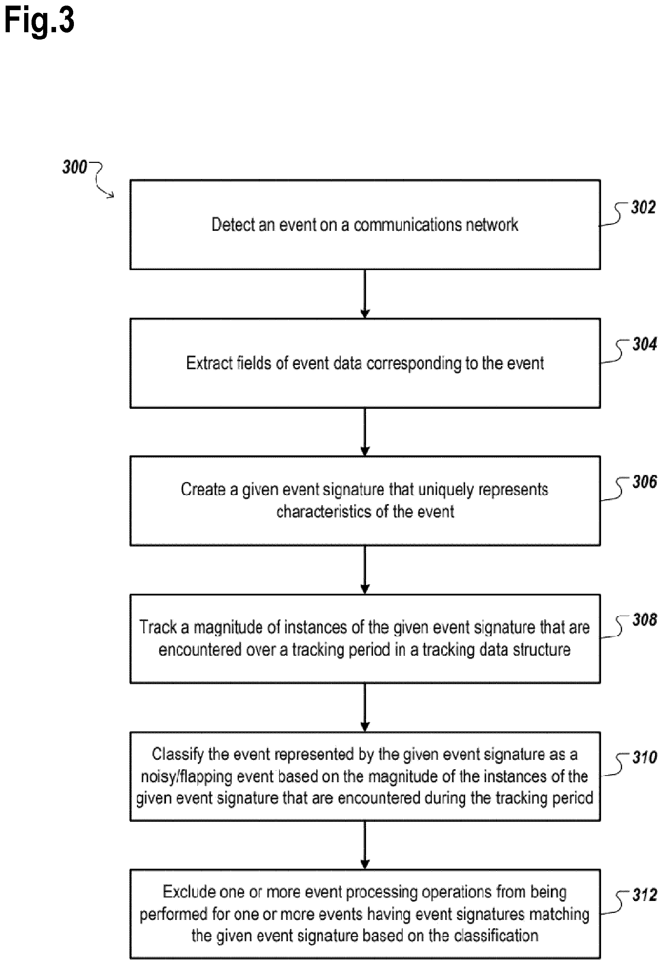

FIG.3 is a flow chart of an example process 300 for managing noisy/flapping events (e.g., alarms) in a communications environment. Operations of the process 300 can be performed, for example, by the top NMS 112. Alternatively, or additionally, operations of the process 300 can be performed by one or more other data processing apparatus. In some implementations, operations of the process 300 can be implemented as instructions (e.g., executable code) stored on a computer readable medium (e.g., non-transitory computer readable medium), such that execution of the instructions by one or more data processing apparatus (e.g., computing devices) cause the one or more data processing apparatus to perform the operations of the process 300.

An event is detected on a communications network (302). In some implementations, the event is reported by a device that is operating on the communications network. For example, as discussed above, a component (i.e., entity) of a device can identify the occurrence of an event and report the event to a network management system (or another data processing apparatus), which detects the event based on the report. For example, as discussed with reference to FIG.2, the device can transmit event data to the network management system, which is parsed by the network management system, thereby enabling the network management system to detect the occurrence of the event at the device. The device can be, for example, an optical line terminal operating in a passive optical network or another device operating in another communications network.

As discussed above, the event data received by the network management system can include data specifying various types of events. The events can be one of a temperature threshold crossed event, a CPU threshold crossed (e.g., out of compute power or memory) event, or an Ethernet line out of power event. Of course, other types of events can also be detected.

Fields of event data corresponding to the event are extracted (304). In some implementations, the event data received by the network management system (or another data processing apparatus) is in an XML format, JSON format, or another format that the network management system is able to parse to extract certain fields of the event data. In some implementations, a combination of two or more of an event type, a device identifier, and/or an entity identifier is extracted from the event data.

A given event signature is created based on the extracted fields of event data (306). In some implementations, the given event signature is a string of characters that uniquely represents the event and/or characteristics of the event. For example, as discussed above, the given event signature can be a hash value obtained by inputting a combination of the extracted fields of event data into a hash function that outputs the given event signature in the form of a hash value. More specifically, the network management system can compute a given hash of a concatenation of the extracted fields (e.g., two or more fields) of event data of the event.

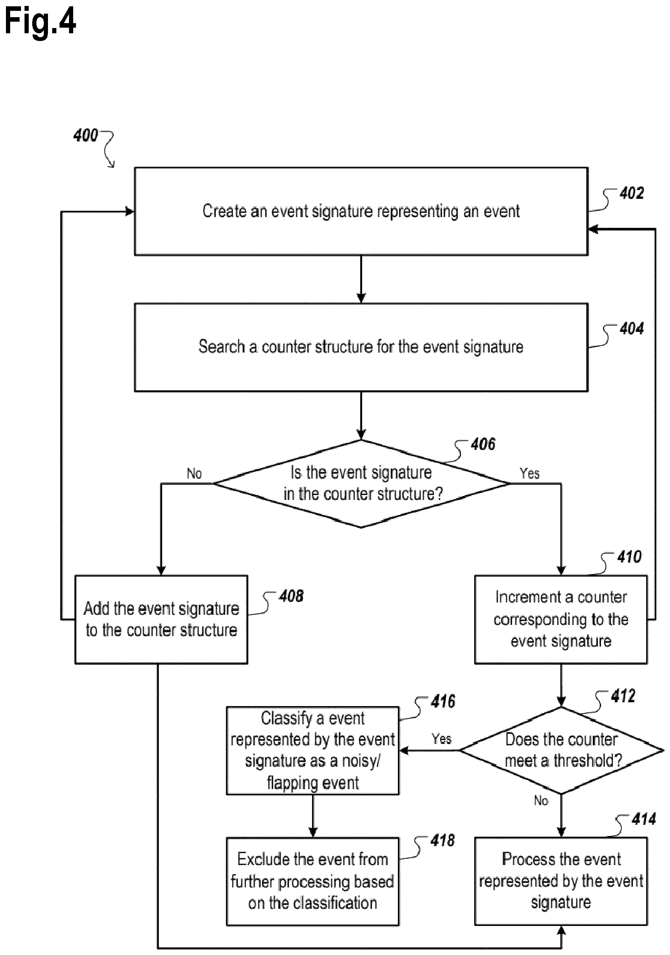

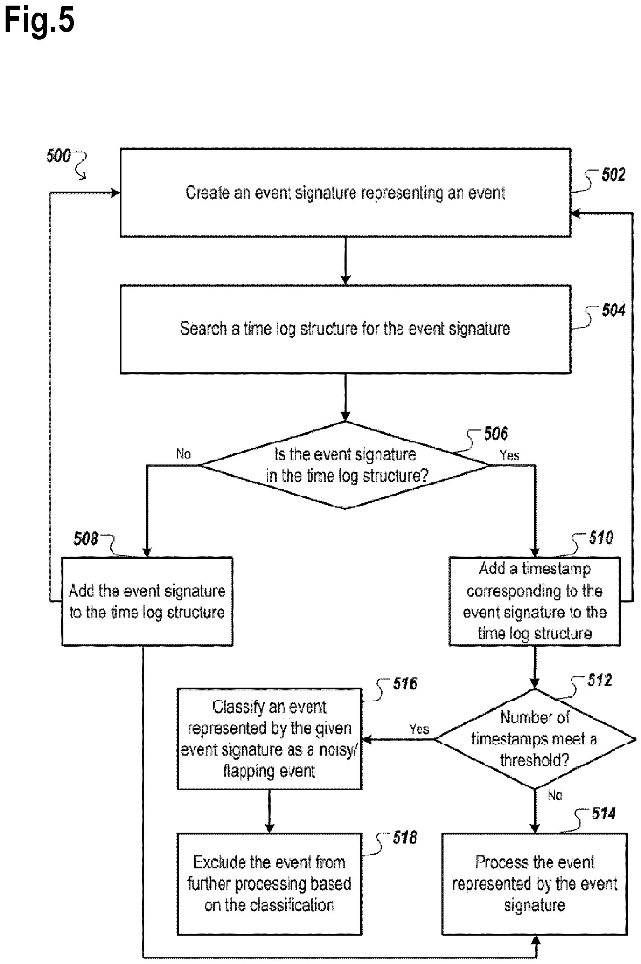

Although, FIG.3 refers to creating a given event signature for an event, in practice, the creation of event signatures for events will be repeated for each subsequent set of event data received by the network management system for subsequently detected events. As such, the network management system will continue to create subsequent event signatures, e.g., by hashing two or more fields of the subsequent event data corresponding to those subsequent events, and used to facilitate tracking the magnitude (e.g., the number) of events that occur over a given time period, as discussed in more detail with reference to FIGs. 4 and 5.

A magnitude of the instances of the given event signature that are encountered over a tracking period is tracked in a tracking data structure (308). As discussed in more detail throughout this application (e.g., FIGs. 2, 4, and 5), the frequency of occurrence of a particular event can be tracked by tracking the magnitude (e.g., number) of instances of the event signature representing that particular event that are encountered by the network management system. For example, if the event signature of the particular event is encountered (e.g., received, detected, or created) by the network management system X number of times, it can be determined that the event represented by that event signature has occurred X times.

As discussed in more detail throughout this document, the magnitude of the instances of a given event signature encountered by the network management system can be tracked over time using a tracking data structure, such as the counter structure 208 or the time log structure 210 discussed above with reference to FIG.2. Of course, other data structures could be used to track the magnitude of instances of a given event signature encountered over time.

Briefly, upon encountering the given event signature, the tracking is generally performed by searching the tracking data structure for the given event signature. When the given event signature is not found in the tracking data structure, the network management system can create an entry in the tracking data structure for the given event signature. When the given event signature is found in the tracking data structure, the network management system can take the appropriate action to increment the mechanism being used to track the magnitude of instances of that given event signature that have been encountered. For example, as discussed in more detail with reference to FIGs. 2, 4, and 5, the network management system can increment a counter or add a timestamp to the entry for the given event signature. In some implementations, the magnitude tracking can be limited to a specified tracking period, and the magnitude can be reset periodically when a new tracking period has been reached, as discussed elsewhere in this specification.

The event represented by the given event signature is classified based on the magnitude of the instances of the given event signature that are encountered during the tracking period (310). The event can be classified as a noisy/flapping event when the magnitude (e.g., number) of instances of the given event signature encountered by the network management system reaches a threshold level (e.g., number of instances as indicated by the tracking data structure). For example, the network management system can access the tracking data structure and determine that at least a threshold number of instances of the given event signature that have been logged in the tracking data structure. In response to determining that at least the threshold number of instances of the given event signature have been logged, the network management system can classify the event represented by that given event signature as a noisy/flapping event. When the magnitude of instances of the given event signature encountered by the network management system does not reach the threshold level, the event represented by the given event signature will not be classified as a noisy/flapping event.

When a given event is classified as a noisy/flagging, the classification can be recorded in one or more ways. For example, a data flag corresponding to the given event signature representing the given event can be set as an indication that the given event represented by the given event signature has been classified as a noisy/flapping event. Additionally, or alternatively, the network management system can create and/or maintain a list of noisy/flapping events. The list can include, for example, the event signatures of the events that are currently classified as noisy/flapping events so that the network management system can determine the current classification of any event based on its corresponding event signature.

One or more event processing operations are excluded from being performed for one or more events having event signatures matching event signatures of events classified as noisy/flapping events. (312). In some implementations, once a given event has been classified as a noisy/flapping event, the network management system can use that classification to prevent continued (e.g., repetitive) processing of the given event. For example, assume that a given event has been classified as a noisy/flapping event, and a given event signature of this given event has been added to a list of noisy/flapping events. In this example, when the network management system encounters an additional event signature, the network management system can search the list of noisy/flapping events to determine whether the additional event signature matches the given event signature, or any other event signature in the list. Assuming that the network management system determines that the additional event signature matches the given event signature, and that the event represented by the given event signature is a noisy/flapping event (e.g., based on the inclusion of the given event signature in the list). In this situation, the network management system can prevent further processing of that event (and any other events that match event signatures in the list) based on the determination that the additional event signature matches the given event signature, and the event is currently classified as a flapping event (e.g., based on the given event signature being included in the list).

Generally speaking, the event processing is excluded/prevented for events that have been classified as noisy/flapping events to protect the system, for example, from overload that may occur by continuously processing these event that are being repeatedly reported to the network management system. For example, it is likely that any further event processing that may be invoked to process these noisy/flapping events has already been initiated and/or completed. Therefore, repeating the event processing will waste computing and network resources to repeat processes that have already been invoked. Moreover, the repeated invoking of the event processing could result in further network events that need to be remedied, or system overload due to insufficient memory or CPU capacity.

The processing that can be excluded/prevent by the network management system can include, for example, any processing that may be carried out to obtain more information about the event, eliminate the event, and/or mitigate effects of the event on the communications system. For example, the network management system could prevent queries for additional event information from being sent to the device that reported the event or other devices that may be able to provide additional information about the event. In another example, the network management system can prevent forwarding of the event data to another device/system that triggers event mitigation processes to be performed since the network management system has already detected this event at least the threshold number of times during the current tracking period, and therefore, already forwarded the event data to the other device/system to trigger the event mitigation processes.

FIG.4 is a flow chart of an example process 400 for tracking events (e.g., alarms) using a counter structure. Operations of the process 400 can be performed, for example, by the top NMS 112. Alternatively, or additionally, operations of the process 400 can be performed by one or more other data processing apparatus. In some implementations, operations of the process 400 can be implemented as instructions (e.g., executable code) stored on a computer readable medium (e.g., non-transitory computer readable medium), such that execution of the instructions by one or more data processing apparatus (e.g., computing devices) cause the one or more data processing apparatus to perform the operations of the process 400.

A given event signature representing a given event is created (402). The event signature can be created in the manner discussed above with reference to FIGs. 2 and 3. For example, the event signature can be created by generating a hash of a concatenation of two or more fields of event data for the given event when the event data characterizing the event is received from a device operating on the communications network.

A counter structure is searched for the given event signature (404). As discussed above, the counter structure is a data structure (e.g., a hash map) in which a counter mechanism is used to track the magnitude (e.g., number of instances) of each event signature that has been encountered, e.g., over a tracking period. The counter structure stores event signatures (e.g., hashes) that have been previously encountered by the network management system (e.g., during a current tracking period). As such, searching the counter structure for the given event signature will reveal whether the event corresponding to the given event signature has been reported during the current tracking period. As discussed elsewhere, the counter structure can be implemented in the form of a hash map, such that the search of the counter structure involves searching a hash map for a hash that matches the given event signature.

A determination is made whether the given event signature is in the counter structure (406). For example, when the counter structure search returns an indication of an event signature entry that matches the given signature, the network management system can determine that the given event signature is in the counter structure. However, if the counter structure search returns a null value or another indication of a lack of an event signature entry that matches the given event signature, the network management system can determine that the given event signature is not included in the counter structure.

When the network management system determines that the given event signature is not included in the counter structure, the event management system can add the given event signature to the counter structure (408). For example, as discussed above with reference to FIG.2, the event management system can add the given event signature to the counter structure and initialize a counter for that given event signature (e.g., set it to 0,1, or some other appropriate starting value), and process the event represented by the given event signature (414).

Once the given event signature has been added to the counter structure, the network management system can continue to create event signatures using event data received from device operating on the communications network. In other words, the event management system can continue to generate subsequent event signatures representing subsequent events using the event data of the events (402). Each subsequent event signature can be created, for example, by generating a subsequent hash of a concatenation of the two or more fields of event data for each of the subsequent events, which enables tracking of the magnitude for each of the subsequent events using the subsequent hashes.

For each of the subsequent event signatures, the event management system can search the counter structure for the subsequent event signature (404) and make a determination of whether the subsequent event signature is included in the counter structure (406). For those subsequent event signatures that are determined to not be included in the counter structure, the network management system can add those subsequent event signatures to the counter structure and iterate in the manner described above.

When the network management system determines that one of the subsequent event signatures is included in the counter structure, the network management system can increment the counter corresponding to the entry (e.g., hash entry) in the counter structure that matches the subsequent event signature. For example, assume that the network management system determines that one or more of the subsequent event signatures (e.g., subsequent hashes) matches the given event signature previously added to the counter structure. In this example, the network management system can increment a counter corresponding to the entry in the counter structure (e.g., hash map) in response to each instance of the subsequent hashes that the network management system determines is matched by the entry in the counter structure for the given event signature.

In some implementations, the network management system can ensure that the counter is reflecting an accurate value for the current tracking period and/or whether the counter should be incremented or reset based on the timestamps of the subsequent event signatures. As discussed above with reference to FIG.2, the counter structure can use a reference timestamp as the reference point for determining whether a new instance of an event signature was encountered during the same tracking period as those that have been counted using the counter.

For example, the network management system can compare timestamps for each of the subsequent event signatures to the reference timestamp that was previously set (e.g., when the entry for the given event signature was initially created) and determine whether each of the timestamps is within a specified amount of time of the reference timestamp. When the timestamp for a subsequent event signature matching the given event signature is within the specified amount of time of the reference timestamp, the counter for the given event signature can be incremented.

However, when the network management system determines that the timestamp for a subsequent event signature matching the given event signature is more than the specified amount of time after the reference timestamp, the network management system can modify the reference timestamp and reset the counter to reflect the fact that a new tracking period has been entered. For example, the network management system can re-initialize the counter (e.g., setting it to 0, 1, or some other initial value), and replace the reference timestamp with the timestamp of the subsequent event signature.

The network management system determines whether the counter for the given event signature meets a threshold (412). In some implementations, this determination is performed by comparing the current value of the counter to a threshold level (e.g., value), and determining whether the counter has reached the threshold level (e.g., is the counter at or above the threshold level).

When the counter is determined to not meet the threshold level, the network management system can continue to process the event represented by the subsequent event signature (414). When the counter is determined to meet the threshold level, the network management system can classify the event represented by the subsequent event signature as a noisy/flapping event (416), and exclude the event represented by the subsequent event signature from further processing based on the classification (418), as discussed above with reference to FIG.3.

FIG.5 is a flow chart of another example process 500 for tracking events (e.g., alarms) using a time log structure. Operations of the process 500 can be performed, for example, by the top NMS 112. Alternatively, or additionally, operations of the process 500 can be performed by one or more other data processing apparatus. In some implementations, operations of the process 500 can be implemented as instructions (e.g., executable code) stored on a computer readable medium (e.g., non-transitory computer readable medium), such that execution of the instructions by one or more data processing apparatus (e.g., computing devices) cause the one or more data processing apparatus to perform the operations of the process 500.

A given event signature representing a given event is created (502). The event signature can be created in the manner discussed above with reference to FIGs. 2 and 3. For example, the event signature can be created by generating a hash of a concatenation of two or more fields of event data for the given event when the event data characterizing the event is received from a device operating on the communications network.

A time log structure is searched for the given event signature (504). As discussed above, the time log structure is a data structure (e.g., a hash map) in which a counter mechanism is used to track each event signature that has been encountered, e.g., over a tracking period. The time log structure stores event signatures (e.g., hashes) that have been previously encountered by the network management system (e.g., during a current tracking period). As such, searching the time log structure for the given event signature will reveal whether the event corresponding to the given event signature has been reported during the current tracking period. The time log structure can be implemented in the form of a hash map, such that the search of the time log structure involves searching a hash map for a hash that matches the given event signature.

A determination is made whether the given event signature is in the time log structure (506). For example, when the time log structure search returns an indication of an event signature entry that matches the given signature, the network management system can determine that the given event signature is in the time log structure. However, if the time log structure search returns a null value or another indication of a lack of an event signature entry that matches the given event signature, the network management system can determine that the given event signature is not included in the time log structure.

When the network management system determines that the given event signature is not included in the time log structure, the event management system can add the given event signature to the time log structure (508). For example, as discussed above with reference to FIG.2, the event management system can add the given event signature to the time log structure, add a timestamp for the given event signature to the time log structure, and process the event represented by the given event signature (514).

Once the given event signature has been added to the time log structure, the network management system can continue to create event signatures using event data received from device operating on the communications network. In other words, the event management system can continue to generate subsequent event signatures representing subsequent events using the event data of the events (502). Each subsequent event signature can be created, for example, by generating a subsequent hash of a concatenation of the two or more fields of event data for each of the subsequent events, which enables tracking of the subsequent events using the subsequent hashes.

For each of the subsequent event signatures, the event management system can search the time log structure for an entry that matches the subsequent event signature (504) and make a determination of whether the subsequent event signature is included in the time log structure (406). For those subsequent event signatures that are determined to not be included in the time log structure, the network management system can add those subsequent event signatures to the time log structure and iterate in the manner described above.

When the network management system determines that one of the subsequent event signatures is included in the time log structure, the network management system can add the timestamp for that subsequent event signature to the entry (e.g., hash entry) in the time log structure that matches the subsequent event signature. For example, assume that the network management system determines that one or more of the subsequent event signatures (e.g., subsequent hashes) matches the given event signature previously added to the time log structure. In this example, the network management system can add the timestamps for these subsequent event signatures to a field of the entry in the counter structure (e.g., hash map) based on the determination that the subsequent hashes match the entry in the time log structure for the given event signature.

In some implementations, the network management system can ensure that the timestamps stored in the time log structure are within the current tracking period based on the timestamps of the subsequent event signatures. As discussed above with reference to FIG.2, the network management system can compare the timestamp for each of the subsequent event signatures and determine whether that timestamp has a value that is more than a specified amount of time after one or more earlier timestamps that have already been stored for the entry matched by the subsequent event signatures.

For example, the network management system can compare timestamps for each of the subsequent event signatures to the earlier logged timestamps (e.g., logged when the entry for the given event signature was initially created), and determine whether each of the timestamps is within a specified amount of time of the earlier timestamps. When the timestamp for a subsequent event signature matching the given event signature is within the specified amount of time of the earlier logged timestamp, the timestamp for the subsequent event signature can be added to the time log structure without removing any of the earlier timestamps.

However, when the network management system determines that the timestamp for a subsequent event signature matching the given event signature is more than the specified amount of time after one or more of the earlier timestamps that have been logged for the given event signature, the network management system can remove those earlier timestamps having timestamps that are more than the specified amount of time prior to the timestamp of the subsequent event signature being considered. In this way, the network management system ensures that the timestamps in the time log structure that are being used to determine the number of events that have occurred within the current tracking period is accurate.

The network management system determines whether the counter for the given event signature meets a threshold (512). In some implementations, this determination is performed by comparing the number of timestamps currently logged in the time log structure for the given event signature to a threshold level (e.g., value), and determining whether the number has reached the threshold level (e.g., is the counter at or above the threshold level).

When the number of timestamps currently logged is determined to not meet the threshold level, the network management system can continue to process the event represented by the subsequent event signature (514). When the number of timestamps currently logged is determined to meet the threshold level, the network management system can classify the event represented by the subsequent event signature as a noisy/flapping event (516), and exclude the event represented by the subsequent event signature from further processing based on the classification (518), as discussed above with reference to FIG.3.

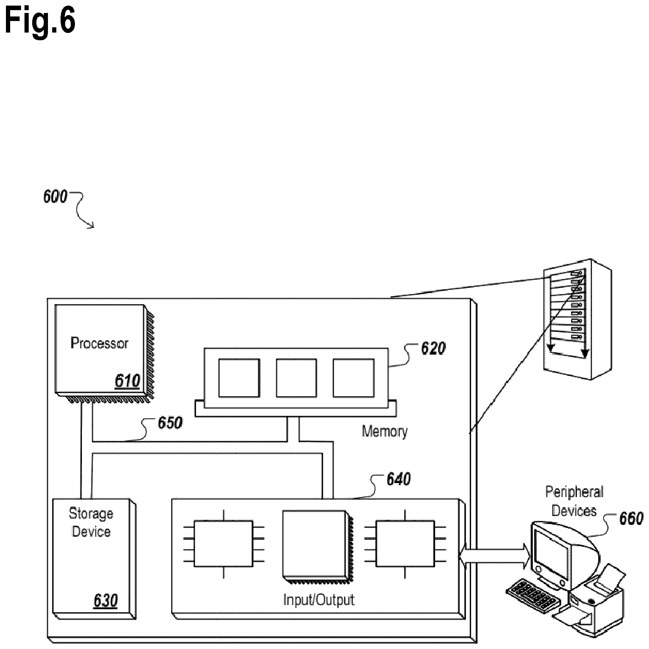

FIG.6 is a block diagram of an example computer system 600 that can be used to perform operations described above. The system 600 includes a processor 610, a memory 620, a storage device 630, and an input/output device 640. Each of the components 610, 620, 630, and 640 can be interconnected, for example, using a system bus 650. The processor 610 is capable of processing instructions for execution within the system 600. In one implementation, the processor 610 is a single-threaded processor. In another implementation, the processor 610 is a multi-threaded processor. The processor 610 is capable of processing instructions stored in the memory 620 or on the storage device 630.

The memory 620 stores information within the system 600. In one implementation, the memory 620 is a computer-readable medium. In one implementation, the memory 620 is a volatile memory unit. In another implementation, the memory 620 is a non-volatile memory unit.

The storage device 630 is capable of providing mass storage for the system 600. In one implementation, the storage device 630 is a computer-readable medium. In various different implementations, the storage device 630 can include, for example, a hard disk device, an optical disk device, a storage device that is shared over a network by multiple computing devices (e.g., a cloud storage device), or some other large capacity storage device.

The input/output device 640 provides input/output operations for the system 600. In one implementation, the input/output device 640 can include one or more network interface devices, e.g., an Ethernet card, a serial communication device, e.g., and RS-232 port, and/or a wireless interface device, e.g., and 802.11 card. In another implementation, the input/output device can include driver devices configured to receive input data and send output data to peripheral devices 660, e.g., keyboard, printer and display devices. Other implementations, however, can also be used, such as mobile computing devices, mobile communication devices, set-top box television client devices, Internet of Things devices, etc.

Although an example processing system has been described in FIG.6, implementations of the subject matter and the functional operations described in this specification can be implemented in other types of digital electronic circuitry, or in computer software, firmware, or hardware, including the structures disclosed in this specification and their structural equivalents, or in combinations of one or more of them.

Embodiments of the subject matter and the operations described in this specification can be implemented in digital electronic circuitry, or in computer software, firmware, or hardware, including the structures disclosed in this specification and their structural equivalents, or in combinations of one or more of them. Embodiments of the subject matter described in this specification can be implemented as one or more computer programs, i.e., one or more modules of computer program instructions, encoded on computer storage medium for execution by, or to control the operation of, data processing apparatus. Alternatively, or in addition, the program instructions can be encoded on an artificially generated propagated signal, e.g., a machine-generated electrical, optical, or electromagnetic signal, that is generated to encode information for transmission to suitable receiver apparatus for execution by a data processing apparatus. A computer storage medium can be, or be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially generated propagated signal. The computer storage medium can also be, or be included in, one or more separate physical components or media (e.g., multiple CDs, disks, or other storage devices).

The operations described in this specification can be implemented as operations performed by a data processing apparatus on data stored on one or more computer-readable storage devices or received from other sources.

The term "data processing apparatus" encompasses all kinds of apparatus, devices, and machines for processing data, including by way of example a programmable processor, a computer, a system on a chip, or multiple ones, or combinations, of the foregoing. The apparatus can include special purpose logic circuitry, e.g., an FPGA (field programmable gate array) or an ASIC (application specific integrated circuit). The apparatus can also include, in addition to hardware, code that creates an execution environment for the computer program in question, e.g., code that constitutes processor firmware, a protocol stack, a database management system, an operating system, a cross-platform runtime environment, a virtual machine, or a combination of one or more of them. The apparatus and execution environment can realize various different computing model infrastructures, such as web services, distributed computing and grid computing infrastructures.

A computer program (also known as a program, software, software application, script, or code) can be written in any form of programming language, including compiled or interpreted languages, declarative or procedural languages, and it can be deployed in any form, including as a stand-alone program or as a module, component, subroutine, object, or other unit suitable for use in a computing environment. A computer program may, but need not, correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program can be deployed to be executed on one computer or on multiple computers that are located at one site or distributed across multiple sites and interconnected by a communication network.

The processes and logic flows described in this specification can be performed by one or more programmable processors executing one or more computer programs to perform actions by operating on input data and generating output. The processes and logic flows can also be performed by, and apparatus can also be implemented as, special purpose logic circuitry, e.g., an FPGA (field programmable gate array) or an ASIC (application specific integrated circuit).

Processors suitable for the execution of a computer program include, by way of example, both general and special purpose microprocessors, and any one or more processors of any kind of digital computer. Generally, a processor will receive instructions and data from a read only memory or a random access memory or both. The essential elements of a computer are a processor for performing actions in accordance with instructions and one or more memory devices for storing instructions and data. Generally, a computer will also include, or be operatively coupled to receive data from or transfer data to, or both, one or more mass storage devices for storing data, e.g., magnetic, magneto optical disks, or optical disks. However, a computer need not have such devices. Devices suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto optical disks; solid state drives; and CD ROM and DVD-ROM disks. The processor and the memory can be supplemented by, or incorporated in, special purpose logic circuitry.

While this specification contains many specific implementation details, these should not be construed as limitations on the scope of any inventions or of what may be claimed, but rather as descriptions of features specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described. Other embodiments are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain implementations, multitasking and parallel processing may be advantageous.

## Claims

1. A method, comprising:
- detecting, by one or more data processing apparatus, an event on a communications network;
- extracting, by the one or more data processing apparatus, two or more fields of event data of the event;
- creating, by the one or more data processing apparatus, a given event signature that uniquely represents characteristics of the event using a function that generates the given event signature as an output in response to receiving the two or more fields of event data as input;
- tracking, in a tracking data structure, a magnitude of instances of the given event signature that are encountered over a tracking period;
- classifying, by the one or more data processing apparatus, the event as a flapping event based on a determination that the magnitude indicates that the given event signature has been encountered at least a threshold number of times within a specified amount of time; and
- excluding, by the one or more data processing apparatus, one or more event processing operations from being performed for one or more events having event signatures matching the given event signature based on the classification of the event as a flapping event.

2. The method of claim 1, wherein excluding one or more event processing operations from being performed comprises:
- encountering an additional event signature;
- determining that (i) the additional event signature matches the given event signature, and (ii) the event is currently classified as a flapping event; and
- preventing processing of the one or more events corresponding to the additional event signature based on the determination that (i) the additional event signature matches the given event signature, and (ii) the event is currently classified as a flapping event.

3. The method according to any of the preceding claims, wherein creating the given event signature that uniquely represents characteristics of the detected event comprises computing a given hash of a concatenation of the two or more fields of event data of the event.

4. The method of claim 3, further comprising:
- generating a subsequent hash of a concatenation of the two or more fields of event data for each subsequent event; and
- tracking the subsequent hashes generated for the subsequent events.

5. The method of claim 4, wherein:
- tracking the subsequent hashes comprises:
- searching a counter structure for the subsequent hash of each of the subsequent events;
- in response to not identifying an entry in the counter structure that matches the subsequent hash, creating an entry in the counter structure corresponding to the subsequent hash; and
- after creating the entry in the counter structure corresponding to the subsequent hash, incrementing a counter corresponding to the entry in response to identifying the entry as a match another of the subsequent hashes; and
- classifying the event as a flapping event comprises determining that the counter corresponding to the entry has reached a threshold level.

6. The method of claim 5, further comprising:
- determining that a given timestamp corresponding to a given subsequent hash is more than a specified amount of time after a reference timestamp corresponding to the entry; and
- updating the reference timestamp based on the given timestamp in response to determining that the given timestamp is more than the specified amount of time after the reference timestamp.

7. The method of claim 4, wherein:
- tracking the subsequent hashes comprises:
- searching a time log structure for the subsequent hash of each of the subsequent events;
- in response to not identifying an entry in the time log structure that matches the subsequent hash:
- creating an entry in the time log structure corresponding to the subsequent hash; and
- adding a timestamp corresponding to the subsequent hash to the entry;
- after creating the entry in the time log structure corresponding to the subsequent hash, adding an additional timestamp corresponding to each subsequent hash that is identified as a match to the entry; and
- classifying the event as a flapping event comprises determining that a number of stored timestamps for the entry has reached a threshold level.

8. The method of claim 7, further comprising:
- in response to identifying the entry in the time log structure, removing one or more timestamps that are more than a specified amount of time prior to a current time.

9. The method according to any of the preceding claims, further comprising:
- comparing a subsequent timestamp of a subsequent instance of the given event signature to a prior timestamp of a prior instance of the given event signature that is stored in the tracking data structure;
- removing the prior timestamp from the tracking data structure based on a determination that the subsequent timestamp is more than the specified amount of time after the prior timestamp;
- adding the subsequent timestamp to the tracking data structure; and
- updating a classification of the event represented by the given event signature based on an updated magnitude of instances of the given event signature determined following removal of the prior timestamp and addition of the subsequent timestamp, wherein updating the classification of the event comprises reclassifying the event as a non-flapping event.

10. A system comprising:
- a data structure; and
- a network management system comprising one or more data processing apparatus configured to interact with the data structure and execute instructions that cause the one or more data processing apparatus to perform operations comprising:
- detecting an event on a communications network;
- extracting two or more fields of event data of the event;
- creating a given event signature that uniquely represents characteristics of the event using a function that generates the given event signature as an output in response to receiving the two or more fields of event data as input;
- tracking, in the data structure, a magnitude of instances of the given event signature that are encountered over a tracking period;
- classifying the event as a flapping event based on a determination that the magnitude indicates that the given event signature has been encountered at least a threshold number of times within a specified amount of time; and
- excluding one or more event processing operations from being performed for one or more events having event signatures matching the given event signature based on the classification of the event as a flapping event.

11. The system of claim 10, wherein excluding one or more event processing operations from being performed comprises:
- encountering an additional event signature;
- determining that (i) the additional event signature matches the given event signature, and (ii) the event is currently classified as a flapping event; and
- preventing processing of the one or more events corresponding to the additional event signature based on the determination that (i) the additional event signature matches the given event signature, and (ii) the event is currently classified as a flapping event.

12. The system according to any of claims 10 or 11, wherein creating the given event signature that uniquely represents characteristics of the detected event comprises computing a given hash of a concatenation of the two or more fields of event data of the event.

13. The system of claim 12, wherein the instructions cause the one or more data processing apparatus to perform operations further comprising:
- generating a subsequent hash of a concatenation of the two or more fields of event data for each subsequent event; and
- tracking the subsequent hashes generated for the subsequent events.

14. The system of claim 13, wherein:
- tracking the subsequent hashes comprises:
- searching a counter structure for the subsequent hash of each of the subsequent events;
- in response to not identifying an entry in the counter structure that matches the subsequent hash, creating an entry in the counter structure corresponding to the subsequent hash; and
- after creating the entry in the counter structure corresponding to the subsequent hash, incrementing a counter corresponding to the entry in response to identifying the entry as a match another of the subsequent hashes; and
- classifying the event as a flapping event comprises determining that the counter corresponding to the entry has reached a threshold level.

15. The system of claim 14, wherein the instructions cause the one or more data processing apparatus to perform operations further comprising:
- determining that a given timestamp corresponding to a given subsequent hash is more than a specified amount of time after a reference timestamp corresponding to the entry; and
- updating the reference timestamp based on the given timestamp in response to determining that the given timestamp is more than the specified amount of time after the reference timestamp.

16. The system of claim 13, wherein:
- tracking the subsequent hashes comprises:
- searching a time log structure for the subsequent hash of each of the subsequent events;
- in response to not identifying an entry in the time log structure that matches the subsequent hash:
- creating an entry in the time log structure corresponding to the subsequent hash; and
- adding a timestamp corresponding to the subsequent hash to the entry;
- after creating the entry in the time log structure corresponding to the subsequent hash, adding an additional timestamp corresponding to each subsequent hash that is identified as a match to the entry; and
- classifying the event as a flapping event comprises determining that a number of stored timestamps for the entry has reached a threshold level.

17. The system of claim 16, wherein the instructions cause the one or more data processing apparatus to perform operations further comprising:
- in response to identifying the entry in the time log structure, removing one or more timestamps that are more than a specified amount of time prior to a current time.

18. The system according to any of claims 10 to 17, wherein the instructions cause the one or more data processing apparatus to perform operations further comprising:
- comparing a subsequent timestamp of a subsequent instance of the given event signature to a prior timestamp of a prior instance of the given event signature that is stored in the data structure;
- removing the prior timestamp from the data structure based on a determination that the subsequent timestamp is more than the specified amount of time after the prior timestamp;
- adding the subsequent timestamp to the data structure; and
- updating a classification of the event represented by the given event signature based on an updated magnitude of instances of the given event signature determined following removal of the prior timestamp and addition of the subsequent timestamp, wherein updating the classification of the event comprises reclassifying the event as a non-flapping event.

19. A non-transitory computer readable medium storing instructions that, upon execution by one or more data processing apparatus, cause the one or more data processing apparatus to perform operations comprising:
- detecting an event on a communications network;
- extracting two or more fields of event data of the event;
- creating a given event signature that uniquely represents characteristics of the event using a function that generates the given event signature as an output in response to receiving the two or more fields of event data as input;
- tracking, in a data structure, a magnitude of instances of the given event signature that are encountered over a tracking period;
- classifying the event as a flapping event based on a determination that the magnitude indicates that the given event signature has been encountered at least a threshold number of times within a specified amount of time; and
- excluding one or more event processing operations from being performed for one or more events having event signatures matching the given event signature based on the classification of the event as a flapping event.

20. The non-transitory computer readable medium of claim 19, wherein excluding one or more event processing operations from being performed comprises:
- encountering an additional event signature;
- determining that (i) the additional event signature matches the given event signature, and (ii) the event is currently classified as a flapping event; and
- preventing processing of the one or more events corresponding to the additional event signature based on the determination that (i) the additional event signature matches the given event signature, and (ii) the event is currently classified as a flapping event.

21. The non-transitory computer readable medium according to any of claims 19 or 20, wherein creating the given event signature that uniquely represents characteristics of the detected event comprises computing a given hash of a concatenation of the two or more fields of event data of the event.

22. The non-transitory computer readable medium of claim 21, wherein the instructions cause the one or more data processing apparatus to perform operations further comprising:
- generating a subsequent hash of a concatenation of the two or more fields of event data for each subsequent event; and
- tracking the subsequent hashes generated for the subsequent events.

23. The non-transitory computer readable medium of claim 22, wherein:
- tracking the subsequent hashes comprises:
- searching a counter structure for the subsequent hash of each of the subsequent events;
- in response to not identifying an entry in the counter structure that matches the subsequent hash, creating an entry in the counter structure corresponding to the subsequent hash; and
- after creating the entry in the counter structure corresponding to the subsequent hash, incrementing a counter corresponding to the entry in response to identifying the entry as a match another of the subsequent hashes; and
- classifying the event as a flapping event comprises determining that the counter corresponding to the entry has reached a threshold level.

24. The non-transitory computer readable medium of claim 23, wherein the instructions cause the one or more data processing apparatus to perform operations further comprising:
- determining that a given timestamp corresponding to a given subsequent hash is more than a specified amount of time after a reference timestamp corresponding to the entry; and
- updating the reference timestamp based on the given timestamp in response to determining that the given timestamp is more than the specified amount of time after the reference timestamp.

25. The non-transitory computer readable medium of claim 22, wherein:
- tracking the subsequent hashes comprises:
- searching a time log structure for the subsequent hash of each of the subsequent events;
- in response to not identifying an entry in the time log structure that matches the subsequent hash:
- creating an entry in the time log structure corresponding to the subsequent hash; and
- adding a timestamp corresponding to the subsequent hash to the entry;
- after creating the entry in the time log structure corresponding to the subsequent hash, adding an additional timestamp corresponding to each subsequent hash that is identified as a match to the entry; and
- classifying the event as a flapping event comprises determining that a number of stored timestamps for the entry has reached a threshold level.

26. The non-transitory computer readable medium of claim 25, wherein the instructions cause the one or more data processing apparatus to perform operations further comprising:
- in response to identifying the entry in the time log structure, removing one or more timestamps that are more than a specified amount of time prior to a current time.

27. The non-transitory computer readable medium according to any of claims 19 to 26, wherein the instructions cause the one or more data processing apparatus to perform operations further comprising:
- comparing a subsequent timestamp of a subsequent instance of the given event signature to a prior timestamp of a prior instance of the given event signature that is stored in the data structure;
- removing the prior timestamp from the data structure based on a determination that the subsequent timestamp is more than the specified amount of time after the prior timestamp;
- adding the subsequent timestamp to the data structure; and
- updating a classification of the event represented by the given event signature based on an updated magnitude of instances of the given event signature determined following removal of the prior timestamp and addition of the subsequent timestamp, wherein updating the classification of the event comprises reclassifying the event as a non-flapping event.
